# EUROPEAN PATENT APPLICATION

(11) **EP 2 322 416 A2**
(43) Date of publication of application: **18.05.2011**
(21) Application number: 10190479.5
(22) Date of filing: 09.11.2010
(51) Int. Cl.: B62K 19/18, B62K 19/32, B62K 21/06

(54) **Coupler and method for manufacturing a bicycle frame**

(30) Priority: 09.11.2009 NL 2003770
(71) Applicant: Batavus B.V., 8444 AR Heerenveen (NL)
(72) Inventor: Schoonhoven, Willem Jorrit, 4611 AJ, Bergen op Zoom (NL); Kramer, Onno, 8442 KW Heerenveen (NL)
(74) Representative: Jansen, Cornelis Marinus

(57) **Abstract**

A coupling piece (1) for attaching to each other a lower tube (2), an upper tube (3) and an outer steering head tube (4) of a bicycle frame comprises:
- a wall construction (7) comprising at least two opposite sidewalls (5, 6) and multiple transverse walls (8, 9, 10, 11), the transverse walls connecting the two sidewalls with each other;
- multiple spaced apart steering head passages (14, 15, 16) through at least two of the transverse walls, the steering head passages being configured to receive the outer steering head tube for attachment of the coupling piece (1) to the outer steering head tube when the outer steering head tube extends through those steering head passages;
- a first attachment portion (17) for attachment of the coupling piece to the lower tube; and
- a second attachment portion (18; 11) for attachment of the coupling piece to the upper tube.

## Description

The invention relates to a method for manufacturing a bicycle frame. More particularly, the invention relates to the mutual attachment of a lower tube, an upper tube and an outer steering head tube of a bicycle frame.

Typically, such lower tube is welded by one of its ends to the outer steering head tube and such upper tube is also welded by one of its ends to the outer steering head tube. It is then important that the welded attachments be reliable. Also, what must be prevented is that relatively large-scale welding on the outer steering head tube leads to undesirable deformation of the outer steering head tube so that its cylindrical shape is disturbed. Furthermore, it is important for the bicycle frame to have a favorable torsional stiffness in the area where the lower tube and the upper tube are attached to the outer steering head tube.

The above-mentioned requirements do not make mutually attaching the tubes always equally simple. This holds all the more because in practice there is a very large variety of different bicycle frames, whose tubes in each case have different (cross sectional) shapes and dimensions and/or in each case join each other at different angles. Accordingly, such different bicycle frames in each case require yet another approach to meet the above-mentioned requirements in a simple manner.

From US4699233A there is known an outer steering head tube 1 in which an inner steering head tube 12 can be pivotally received. To that end, the outer steering head tube 1 is manufactured integrally, both at its upper end and at its lower end, with parts 10 that are provided with bearings 11 for the inner steering head tube 12. Furthermore, the outer steering head tube 1 is integrally manufactured with laterally projecting supporting portions 4 and 9. Lower tubes 5 can be welded to the supporting portion 4, and upper tubes 2 can be welded to the supporting portion 9.

A drawback of this known outer steering head tube 1 with integrally manufactured supporting portions 4 and 9 for upper tubes 2 and lower tubes 5 is that it is relatively complex to manufacture this outer steering head tube. An extra problematic circumstance here is that in practice there is a very large variety of different bicycle frames, whose tubes in each case have different (cross sectional) shapes and dimensions and/or in each case join each other at different angles. This means that the design of this known outer steering head tube, in itself already complex to manufacture, varies with each such different bicycle frame.

From US2004/182634A1 an outer steering head tube is known that is similar to the outer steering head tube known from US4699233A. For example, in Figs. 1, 2 and 11 of US2004/182634A1 an outer steering head tube unit 12 can be seen, consisting of the outer steering head tube 13 and, integrally forged therewith, a supporting portion 14 for a lower tube. In the outer steering head tube 13 an inner steering head tube, being a component of the front fork 28 shown in Fig. 1, can be pivotally received. Consequently, the outer steering head tube known from US2004/182634Al has similar drawbacks to the outer steering head tube known from US4699233A.

Also from JP8290792A, JP2007030865A and US6481522B1, constructions are known of which the part functioning as outer steering head tube is manufactured integrally with projecting attachment parts for attachment of the construction to lower tubes and/or upper tubes of a frame. Therefore these known constructions suffer from similar drawbacks to the above-mentioned drawbacks of the outer steering head tube known from US4699233A.

It is an object of the invention to provide at least an alternative solution to attach to each other a lower tube, an upper tube and an outer steering head tube of a bicycle frame, and more particularly to provide a solution according to which it is simple to attach the tubes mentioned to each other in a reliable manner.

To that end, the invention provides a coupling piece according to claim 1, and a method according to claim 12. Advantageous embodiments of the invention are laid down in the dependent claims. The invention may be embodied furthermore in a bicycle frame according to claim 10 and in a bicycle according to claim 11.

The coupling piece according to the invention can be manufactured separately. Coupling pieces can therefore be ready in large numbers prior to the time when the respective frame tubes are to be joined together to manufacture bicycle frames. With such a ready coupling piece, mutually attaching a lower tube, an upper tube and an outer steering head tube of a bicycle frame is a relatively simple job. The outer steering head tube can be simply fitted through the multiple steering head passages and, for example, be welded to the edges of those steering head passages. Thus, multiple welds running fully around the outer steering head tube are obtained, which results in a robust attachment of the outer steering head tube to the coupling piece. This results in a favorably distributed force transmission between outer steering head tube and coupling piece. The lower tube can be welded to the first attachment portion of the coupling piece and the upper tube can be welded to the second attachment portion of the coupling piece. With respect to the known procedure of welding a lower tube and an upper tube each directly to the outer steering head tube, with a coupling piece according to the invention the overall welding is hence distributed over multiple joints.

During welding of the lower tube to the first attachment portion and of the upper tube to the second attachment portion, less heat transfer to the outer steering head tube occurs than when these tubes are each welded directly to the outer steering head tube. Undesirable deformation of the outer steering head tube is thereby prevented.

Furthermore, owing to the use of the coupling piece, the bicycle frame obtains a favorable torsional stiffness. This favorable torsional stiffness is the result of a combination of factors. One of those factors is that the outer steering head tube extends through the multiple steering head passages and is thereby enclosed all around by the edges of those passages. Other factors are the presence of the wall construction, the first attachment portion and the second attachment portion, due to which the lower tube, by means of the wall construction of the coupling piece, so to speak, blends in a continuous form with the upper tube. In a general sense it can also be said that owing to the coupling piece a more favorably distributed internal stress distribution is created in the overall construction, with less intense local peak stresses in the construction. This promotes the reliability of the mutual attachments of the frame tubes.

Furthermore, the availability of coupling pieces according to the invention simplifies mutually attaching the tubes of a practically very large variety of different bicycle frames, whose tubes in each case have different (cross sectional) shapes and dimensions and/or in each case join each other at different angles. With such different bicycle frames, owing to the coupling piece according to the invention, in each case a similar approach can be used to weld the tubes together reliably in a simple manner. Then the only essential difference is that the coupling pieces possibly have other design details for other kinds of bicycle frames. For example, the first attachment portion and the second attachment portion may be designed differently or the steering head passages may be arranged differently, for example, to create a different steering head angle between the outer steering head tube and the lower tube. However, attaching the outer steering head tubes, lower tubes and upper tubes to the different coupling pieces remains substantially alike and equally simple in each case.

The wall construction of the coupling piece may be manufactured of various materials, such as, for example, a metal, and may be manufactured in various ways.

In a preferred embodiment, at least the wall construction of the coupling piece is manufactured from an extrusion profile and obtained by cutting-off from the extrusion profile. Thus, very large numbers of the wall constructions can be manufactured relatively inexpensively and reliably to obtain the principal body of the coupling pieces. Furthermore, it is possible to obtain a large variety of different wall constructions, and hence a large variety of different coupling pieces, from a single type of extrusion profile by varying the cuts chosen. Varying may be done, for example, with the, viewed in the sense of the front and rear of the bicycle frame, cut-off front edges and rear edges of the sidewalls and of the transverse walls of the wall construction. But varying may also be done with dimensions and (relative) positions of the steering head passages cut out of the transverse walls.

Preferably, the extrusion profile is manufactured using extrusion in an extrusion direction which, viewed in a condition in which the coupling piece is at least attached to the lower tube and to the outer steering head tube, is parallel to a plane in which the-principal form of the bicycle frame extends and which crosses the axial direction of the outer steering head tube. By the use of such an extrusion direction, the first attachment portion and the second attachment portion can be so formed from the wall construction that such attachments to the lower tube and the upper tube, respectively, are possible.

In further preferred embodiments, the first attachment portion exhibits a first tubular form which is configured for interlocking with an end of the lower tube for realizing said attachment of the coupling piece to the lower tube and/or the second attachment portion exhibits a second tubular form which is configured for interlocking with an end of the upper tube for realizing said attachment of the coupling piece to the upper tube. The interlocks referred to may be such that the respective tube end embraces the respective tubular form or that the respective tubular form embraces the respective tube end. Use of such interlocking tubular forms promotes a strong and stable attachment, as well as a good force transmission between the respective tube end and the coupling piece, and contributes to a further extent to a favorable torsional stiffness of the bicycle frame.

In a further embodiment, at least the first attachment portion and the steering head passages are so configured that in a condition in which the coupling piece is at least attached to the lower tube and to the outer steering head tube, a bicycle cable can be guided between the outer steering head tube and one of the two sidewalls and/or between the outer steering head tube and the other of the two sidewalls, to the interior of the lower tube. Such a bicycle cable can be, for example, a brake cable, a gear cable or a power cable. Especially for, for example, a brake cable or gear cable that is connected with a manual operation element attached to the bicycle handlebars, such a cable guide is eminently suitable, because the position of the coupling piece at the junction of the lower tube to the outer steering head tube ensures a gradual and limited curvature of the cable. This curvature proceeds in a very natural manner. Extreme local curvatures, such as, for example, kinks, in the cable are thus prevented. This promotes a reliable functioning of such cables.

In a further embodiment, in a condition in which the coupling piece is at least attached to the lower tube and to the outer steering head tube, the wall construction extends, viewed in the direction of the front of the bicycle frame, farther than the outer steering head tube. A thus forwardly projecting wall construction contributes to a further extent to the bicycle frame obtaining a favorable torsional stiffness. As a result, the lower tube, which by means of the wall construction of the coupling piece, so to speak, blends in a continuous form with the upper tube, will "merge" into the upper tube with a more gradual principal curvature. A thus forwardly projecting wall construction further provides the advantage of creating the possibility of attaching various bicycle accessories forwardly of the outer steering head tube to or in the coupling piece, such as, for example, bicycle lighting elements, cable guide elements, measuring instruments, etcetera.

Preferably, the coupling piece furthermore comprises a cover element detachably attachable to the wall construction, which in its attached condition, viewed in the direction of the front of the bicycle frame, likewise extends farther than the outer steering head tube. Such a cover element may be manufactured of various materials, for example, of a plastics material. An advantage of such a cover element is that it can be designed and manufactured separately from the wall construction and thus is simple to configure for therein or thereon accommodating various bicycle accessories or facilities for such accessories. Also, advantageously, such cover elements are exchangeable with other such cover elements having other design features, so that a large variety of bicycle accessories to be accommodated is possible.

In a preferred embodiment, the cover element comprises at least one cable passage for leading a bicycle cable into the coupling piece. Cable guidance is thereby realized in an efficient manner.

In the following, the invention will be further elucidated with reference to the schematic figures in the appended drawing.
Fig. 1 shows in perspective an example of an embodiment of a coupling piece according to the invention together with examples of an outer steering head tube, a part of a lower tube and a part of an upper tube, in an unattached condition.
Fig. 2 shows in perspective the examples of Fig. 1 once again, but in an attached condition.
Fig. 3 shows in perspective the examples of Fig. 2 once again, together with an example of an embodiment of a cover element attached to a wall construction of the coupling piece.
Fig. 4 shows a similar situation to Fig. 2, but with an upper tube attached to the coupling piece in a different manner.

In the Figures there is shown a coupling piece 1 for attaching to each other a lower tube 2, an upper tube 3 and an outer steering head tube 4 of a bicycle frame.

The coupling piece 1 comprises a wall construction 7. The wall construction 7 comprises two opposite sidewalls 5, 6 and multiple transverse walls 8, 9, 10, 11. The transverse walls 8, 9, 10, 11 connect the two sidewalls 5, 6 with each other.

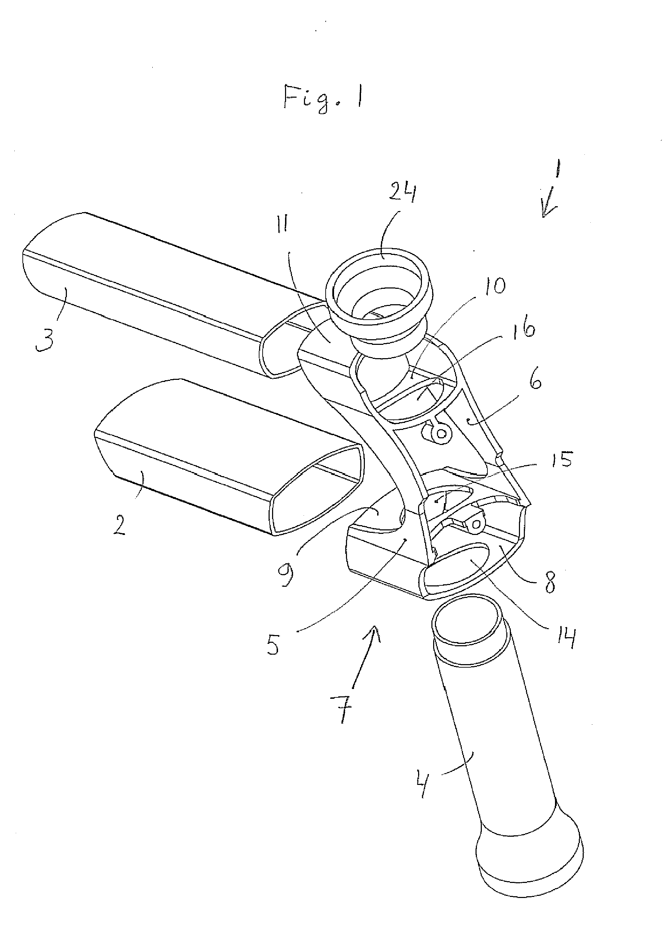

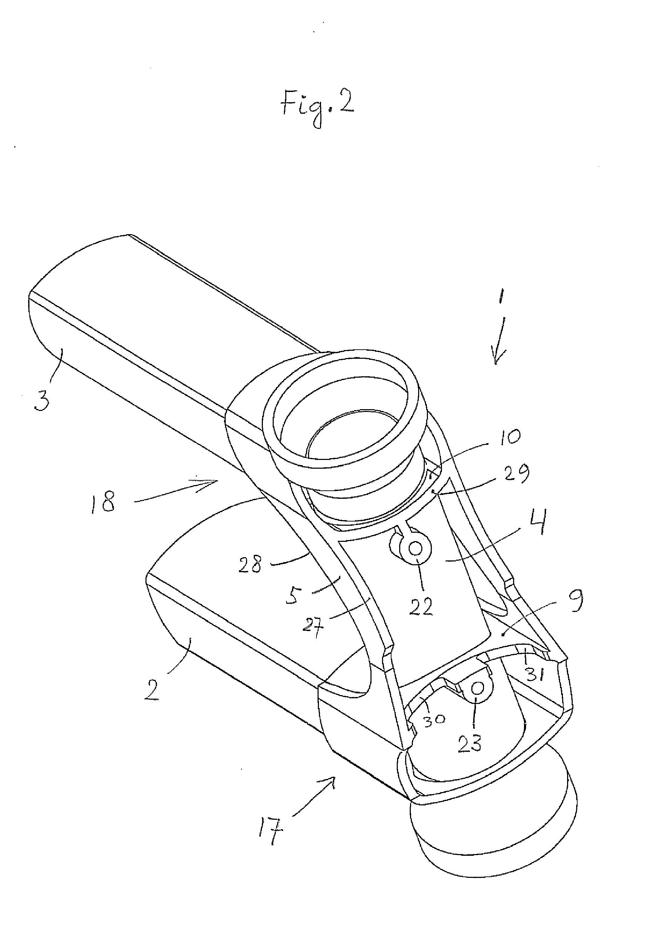

The wall construction 7 furthermore comprises multiple spaced apart steering head passages 14, 15, 16 through the respective transverse walls 8, 9, 10. The steering head passages 14, 15, 16 are configured to receive the outer steering head tube 4 for attachment of the coupling piece 1 to the outer steering head tube 4 when the outer steering head tube extends through those steering head passages 14, 15, 16. In the situations shown in Figs. 2 to 4, the outer steering head tube 4 is arranged through the steering head passages 14, 15, 16 and welded to the respective transverse walls 8, 9, 10 at the edges of those steering head passages. It is noted that in the example shown the outer steering head tube 4 is provided with a detachable top part which is designated in Fig. 1 with reference numeral 24.

The wall construction 7 furthermore comprises a first attachment portion 17 (designated in Fig. 2) for attachment of the coupling piece 1 to the lower tube 2, as well as a second attachment portion 18 (designated in Fig. 2) for attachment of the coupling piece 1 to the upper tube 3.

In the example shown, the wall construction 7 of the coupling piece 1 is manufactured from an extrusion profile and obtained by cutting-off from the extrusion profile. In Fig. 2 a few of such cuts are designated with reference numerals, such as the cut-off front edge 27 of the sidewall 5, the cut-off rear edge 28 of the sidewall 5 and the cut-off front edge 29 of the transverse wall 10. Furthermore, in the example shown, the steering head passages 14, 15, 16 in the respective transverse walls 8, 9, 10 are obtained by cutting (bent) disc-shaped parts out of the extrusion profile.

In the example shown, the first attachment portion 17 has a first tubular form which is configured for interlocking with an end of the lower tube 2 for realizing the attachment of the coupling piece 1 to the lower tube 2. In the example, the first tubular form is formed by the transverse walls 8 and 9 as well as by lower parts of the sidewalls 5 and 6. Furthermore, in the example shown, the second attachment portion 18 has a second tubular form which is configured for interlocking with an end of the upper tube 3 for realizing the attachment of the coupling piece 1 to the upper tube 3. In the example, the second tubular form is formed by the transverse walls 10 and 11 as well as by upper parts of the sidewalls 5 and 6.

At the bottom of Fig. 2, it can be seen that the first attachment portion 17 and the steering head passages 14, 15, 16 are so configured that it is possible to lead a bicycle cable between the outer steering head tube 4 and the sidewall 5 to the interior of the lower tube 2. Likewise, it is possible to lead a bicycle cable between the outer steering head tube 4 and the other sidewall 6, located opposite the sidewall 5, to the interior of the lower tube 2. In Fig. 2 it can further be seen that it is optionally possible to provide the front edge of the transverse wall 9 with receding portions 30, 31 which provide extra space to lead such cables with gradual and limited curvature to the interior of the lower tube 2.

The Figures show furthermore that in a condition in which the coupling piece 1 is at least attached to the lower tube 2 and to the outer steering head tube 4, the wall construction 7, viewed in the direction of the front of the bicycle frame, extends farther than the outer steering head tube 4.

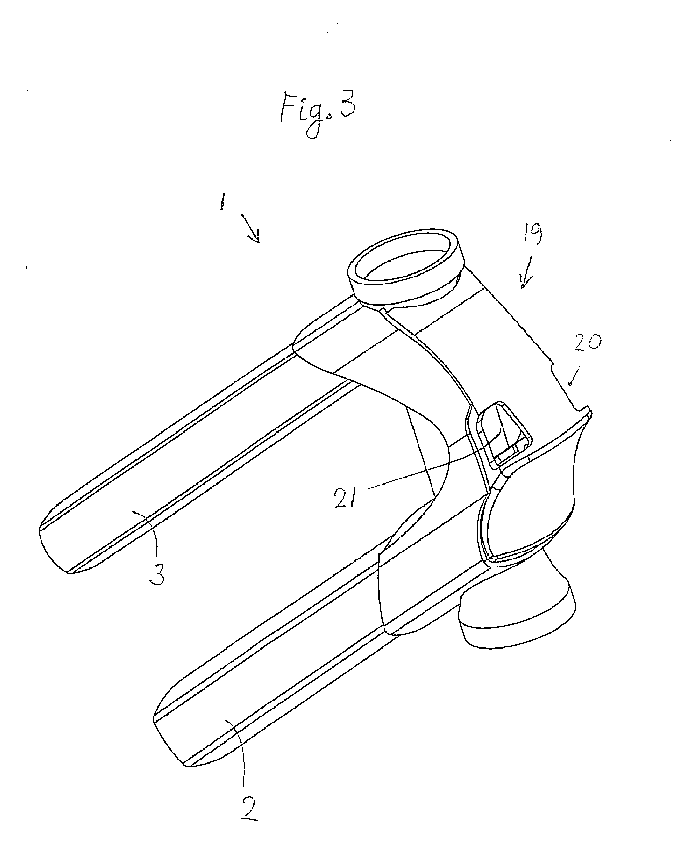

Fig. 3 shows a cover element 19 detachably attachable to the wall construction 7, which in its attached condition, viewed in the direction of the front of the bicycle frame, also extends farther than the outer steering head tube 4. In the example shown, the cover element 19 is attached to the wall construction 7 with screws, not shown, using the passages in the screw receiving elements 22 and 23, shown in Fig. 2. These screw receiving elements 22 and 23 can be integral parts of the wall construction 7 in that they are co-extruded together with the other parts of the wall construction 7 and are obtained by cutting-off from the extrusion profile.

Furthermore, Fig. 3 shows that the cover element 19 comprises two cable passages 20, 21 for leading bicycle cables into the coupling piece 1.

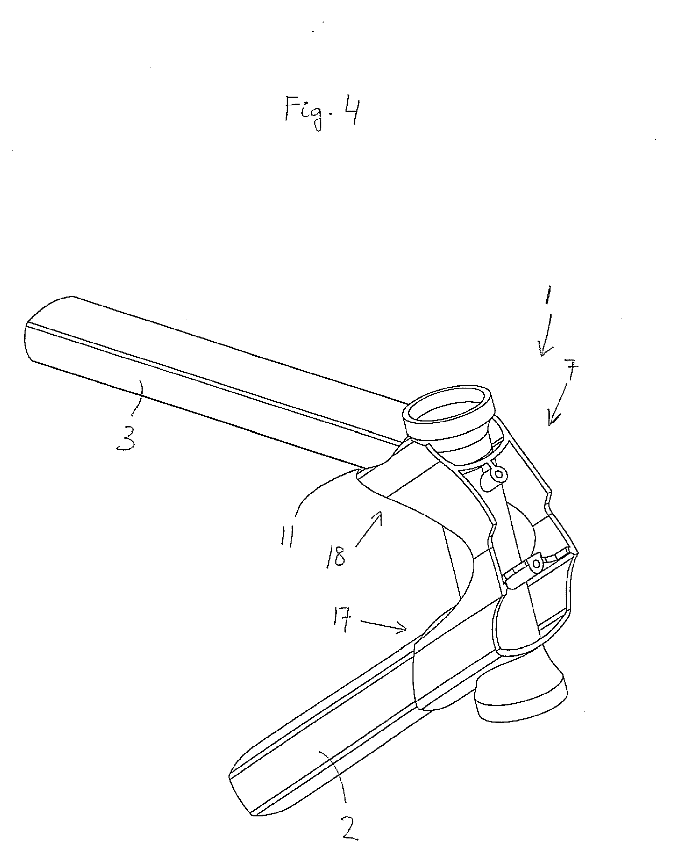

Referring now to Fig. 4, there is shown a similar situation to Fig. 2, but with an upper tube 3 attached to the coupling piece 1 in a different manner. While in the situation of Fig. 2 the depicted end of the upper tube 3 is interlocked with the second tubular form of the second attachment portion 18, in the situation of Fig. 4 the end of the upper tube 3 shown in Fig. 4 is welded to the top surface of the transverse wall 11 of the wall construction 7. As a result, the angle between the upper tube 3 and the outer steering head tube 4 in Fig. 4 is different than in Fig. 2. The situation shown in Fig. 4 is generally suitable for a so-called "men's design" of a bicycle frame, while the situation shown in Fig. 2 is generally suitable for a so-called "lady's design" of a bicycle frame. In the situation of Fig. 4, different angles between the upper tube 3 and the outer steering head tube 4 can be chosen by cutting off the upper tube 3 at different angles for obtaining a differently beveled attachment end of the upper tube 3.

It is noted that the above-mentioned examples of embodiments do not limit the invention and that various alternatives are possible within the scope of the appended claims.

For example, it is possible, after at least partial cutting away of the transverse wall 11, to weld the end of the upper tube 3 shown in Fig. 4 to the top surface of a rearwardly extended transverse wall 10 of the wall construction 7, so that the upper tube 3 also sustains lateral support from upper portions of the sidewalls 5 and 6, to which upper portions the upper tube 3 can then be welded as well.

Furthermore, the sidewalls, the transverse walls and the first and the second attachment portions of the coupling piece can have various other forms and, for example, varying may be done in respect of the number of transverse walls. In the case where the wall construction is manufactured from an extrusion profile, such variations can be obtained by varying the forms of the extrusion profile and/or by varying the forms of the cuts of the extrusion profile.

Also, many form variations of the cover elements are possible and/or a single coupling piece can comprise multiple cover elements.

Other variants or modifications, however, are also possible. These and similar alternatives are understood to fall within the framework of the invention as defined in the appended claims.

## Claims

1. A coupling piece for attaching to each other a lower tube (2), an upper tube (3) and an outer steering head tube (4) of a bicycle frame, wherein the coupling piece (1) has an unattached condition in which at least the outer steering head tube is not yet attached to the coupling piece, comprising:
- a wall construction (7) comprising at least two opposite sidewalls (5, 6) and multiple transverse walls (8, 9, 10, 11), the transverse walls connecting the two sidewalls with each other;
- multiple spaced apart steering head passages (14, 15, 16) through at least two of the transverse walls, the steering head passages being configured to receive the outer steering head tube for attachment of the coupling piece (1) to the outer steering head tube when the outer steering head tube extends through those steering head passages;
- a first attachment portion (17) for attachment of the coupling piece to the lower tube; and
- a second attachment portion (18; 11) for attachment of the coupling piece to the upper tube.

2. A coupling piece according to claim 1, wherein at least the wall construction (7) of the coupling piece (1) is manufactured from an extrusion profile and is obtained by cutting-off from the extrusion profile.

3. A coupling piece according to claim 2, wherein the extrusion profile is manufactured through extrusion in an extrusion direction which, viewed in a condition in which the coupling piece (1) is at least attached to the lower tube (2) and to the outer steering head tube (4), is parallel to a plane in which the principal form of the bicycle frame extends and which crosses the axial direction of the outer steering head tube (4).

4. A coupling piece according to any one of the preceding claims, wherein the first attachment portion (17) exhibits a first tubular form which is configured for interlocking with an end of the lower tube (2) for realizing said attachment of the coupling piece (1) to the lower tube.

5. A coupling piece according to any one of the preceding claims, wherein the second attachment portion (18) exhibits a second tubular form which is configured for interlocking with an end of the upper tube (3) for realizing said attachment of the coupling piece (1) to the upper tube.

6. A coupling piece according to any one of the preceding claims, wherein at least the first attachment portion (17) and the steering head passages (14, 15, 16) are so configured that in a condition in which the coupling piece (1) is at least attached to the lower tube (2) and to the outer steering head tube (4), a bicycle cable can be led between the outer steering head tube and one of the two sidewalls (5, 6) and/or between the outer steering head tube and the other of the two sidewalls (5, 6) to the interior of the lower tube.

7. A coupling piece according to any one of the preceding claims, wherein in a condition in which the coupling piece (1) is at least attached to the lower tube (2) and to the outer steering head tube (4), the wall construction (7), viewed in the direction of the front of the bicycle frame, extends farther than the outer steering head tube.

8. A coupling piece according to claim 7, further comprising a cover element (19) detachably attachable to the wall construction (7), which in its attached condition, viewed in the direction of the front of the bicycle frame, also extends farther than the outer steering head tube (4).

9. A coupling piece according to claim 8, wherein the cover element (19) comprises at least one cable passage (20, 21) for leading a bicycle cable into the coupling piece (1).

10. A bicycle frame comprising a coupling piece (1) according to any one of the preceding claims attached to the lower tube (2), to the upper tube (3) and to the outer steering head tube (4) of the bicycle frame.

11. A bicycle comprising a bicycle frame according to claim 10.

12. A method for manufacturing a bicycle frame, wherein a lower tube (2), an upper tube (3) and an outer steering head tube (4) are mutually attached by means of a coupling piece (1) according to any one of claims 1 to 9.
